# EUROPÄISCHE PATENTANMELDUNG

(11) **EP 0 937 651 A2**
(43) Veröffentlichungstag der Anmeldung: **25.08.1999**
(21) Anmeldenummer: 99102489.4
(22) Anmeldetag: 10.02.1999
(51) Int. Cl.: B65D 30/08

(54) **Verbundfolie, insbesondere zur Herstellung von Verpackungsbeuteln, sowie aus einer derartigen Verbundfolie hergestellter Verpackungsbeutel**

(30) Priorität: 19.02.1998 DE 29802833 U
(71) Anmelder: Imer, Rodney Haydn, 08017 Barcelona-Vallvidrera (ES)
(72) Erfinder: Imer, Rodney Haydn, 08017 Barcelona-Vallvidrera (ES)
(74) Vertreter: Feder, Wolf-Dietrich, Dr. Dipl.-Phys.

(57) **Zusammenfassung**

Eine Verbundfolie, insbesondere zur Herstellung von Verpackungsbeuteln und -kartons. Sie besteht aus mindestens zwei miteinander verschweißten Schichten, wobei mindestens eine erste Schicht aus einer eine Wellenstruktur aufweisenden Ein- oder Mehrschichtfolie (3.2) besteht, auf die mindestens eine weitere, eine ebene Struktur aufweisende Ein- oder Mehrschichtfolie (3.1) an mindestens einer Seite derart aufgebracht ist, daß sich die Oberflächen der beiden Schichten linienweise im Bereich der Wellenkämme (3.3) der ersten Schicht berühren und dort miteinander verschweißt sind zur Bildung geradliniger, paralleler Kanäle (3.4) zwischen den Schichten. Die eine Wellenstruktur aufweisende Schicht (3.2) und/oder die eine ebene Struktur aufweisende Schicht (3.1) kann aus einer Ein- oder Mehrschicht Kunststoffolie bestehen. Es ist aber auch möglich, daß eine der beiden Schichten aus Papier oder Pappe besteht, wobei diese Schicht dann einen Hitzeversiegelbarkeit erzeugenden Zusatzstoff enthalten kann oder mit einem solchen Zusatzstoff versehen sein kann.

## Beschreibung

Die Erfindung betrifft eine Verbundfolie mit den Merkmalen aus dem Oberbegriff des Patentanspruches 1.

Es ist bekannt bei Verpackungen, beispielsweise Kartons aus Papier oder Pappe, eine erhebliche Materialersparnis bei guter Steifigkeit dadurch zu erzielen, daß mindestens eine ebene und mindestens eine, eine Wellenstruktur aufweisende Papier- oder Pappeschicht aufeinander geklebt werden, was zu einem als "Wellpappe" bekannten Material führt, das dann zu Kartons weiterverarbeitet werden kann.

Weiterhin ist es bekannt, bei aus Kunststoff bestehenden dickwandigeren Behältern, wie Kästen oder auch Kinderspielhäusern, Isolierplatten und dergleichen dünne Kunststoffplatten zu verwenden, die zur Versteifung eine wellenartige Struktur aufweisen.

Bei Verpackungsbeuteln, die im allgemeinen aus einem dünnen Kunststoffolienmaterial bzw. Kunststoffverbundfolienmaterial bestehen, werden ausschließlich glatte Folienstrukturen verwendet. Dies führt insbesondere bei Verpackungsbeuteln für flüssige und feinpulverförmige Stoffe zu einer erheblichen Instabilität der Form und darauf beruhend zu einer außerordentlich schlechten Standfestigkeit. Der Erfindung liegt die Aufgabe zugrunde, eine Verbundfolie der im Oberbegriff des Patentanspruchs 1 erwähnten Bauart so auszugestalten, daß sie eine solche Flexibilität, aber auch Steifigkeit aufweist, daß sie zur Herstellung von Verpackungsbeuteln und -kartons geeignet ist, wobei neben dem Vorteil einer Materialersparnis eine gute Formstabilität, Standfestigkeit und Widerstandskraft gegen Deformation der Verpackungsbeutel oder -kartons erreicht werden sollte. Die Lösung dieser Aufgabe erfolgt erfindungsgemäß mit den Merkmalen aus dem kennzeichnenden Teil des Patentanspruchs 1. Vorteilhafte Weiterbildungen der erfindungsgemäßen Verbundfolie sind in den abhängigen Ansprüchen 2 bis 13 beschrieben.

Ein Verpackungsbeutel oder -karton, bestehend aus der Verbundfolie nach der Erfindung, ist Gegenstand des Schutzanspruchs 14. Vorteilhafte Weiterbildungen dieses Verpackungsbeutels sind in den abhängigen Ansprüchen 15 und 16 beschrieben.

Der Grundgedanke der Erfindung besteht darin, das bei regnen Papier- und Pappeschichten bekannte Prinzip auf dünne Kunststoffolien bzw. hitzeversiegelbare Folien anzuwenden zur Herstellung einer Verbundfolie, bei der mindestens eine der Folienschichten eine wellenartige Struktur aufweist, was zur Folge hat, daß zwischen den Schichten geradlinige, parallel zueinander verlaufende Kanäle entstehen.

Die erfindungsgemäße Verbundfolie hat deutlich andere Eigenschaften als eine aus ebenen Schichten aufgebaute flexible Verbundfolie. Sie kann überall dort eingesetzt werden, wo übliches Wellpappenmaterial oder auch Kunststoffplatten mit Wellenstruktur zu steif sind, nicht flüssigkeitsdicht oder nicht produktgeeignet sind und wo übliche flexible Verpackungsfolien keine ausreichende Steifigkeit für bestimmte Zwecke besitzen und so sehr dicke und schwere Folien eingesetzt werden müßten, um die gewünschte Verpackungssteifigkeit zu erzielen.

Die erfindungsgemäße Verbundfolie ist insbesondere geeignet zur Herstellung von Verpackungsbeuteln wie beispielsweise Schlauch- oder Standbeuteln oder zur Herstellung von Verpackungskartons.

Gegenüber üblichen, aus ebenen Schichten bestehenden oder aufgebauten flexiblen Verpackungsfolien hat die erfindungsgemäße Folie eine Reihe von Vorteilen.

Ein Vorteil besteht darin, daß die innerhalb der Verbundfolie schräg verlaufenden Folienbereiche, die die Seiten der Wellenstruktur bilden, wie tragende Balken gegenüber von Biegemomenten funktionieren. Weiterhin ist die Folie gegen Deformation bei Druck sehr widerstandsfähig, da bekanntlich die Deformation eines lasttragenden Teils abhängig von der Dicke dieses lasttragenden Teils ist und bei der erfindungsgemäßen Verbundfolie die effektive Dicke erhöht wird.

Schließlich besteht ein weiterer bemerkenswerter Vorteil darin, daß bei einem Verpackungsbeutel oder -karton, der aus Folienstücken aufgebaut ist, die der erfindungsgemäßen Verbundfolie entsprechen, bei der Herstellung des Verpackungsbeutels bzw. -kartons die offenen Enden der in der Folie laufenden geradlinigen Kanäle durch Verschweißen geschlossen werden können und somit geschlossene Luftkammern entstehen, die der Gesamtstruktur eine weitere erhöhte Widerstandsfähigkeit gegen Deformation verleihen.

Die Funktion der erfindungsgemäßen Verbundfolie in einem solchen Verpackungsbeutel oder -karton ist vergleichbar mit dem Gitterwerk bei Baukonstruktionen, mit dem auch bei erheblicher Material- und Gewichtsersparnis eine hohe Festigkeit und Steifigkeit erreicht wird.

Dies führt dazu, daß eine Verpackung aus der erfindungsgemäßen Verbundfolie eine sehr starke Widerstandsfähigkeit gegen Deformation unter Last oder auch unter Innendruck hat. Die einzelnen Folienschichten der Verbundfolie können dabei dünner gehalten sein, als dies bei der Verwendung von Verbundfolien aus ebenen Schichten möglich wäre, so daß auch eine erhebliche Materialersparnis auftritt.

Weitere Vorteile der aus der erfindungsgemäßen Verbundfolie hergestellten Verpackungsbeutel oder -kartons bestehen darin, daß sie einen besseren Isolierfaktor haben, da mehr als 50% der Außenwand mit geschlossenen Luftkammern versehen ist. Weiterhin besitzen die Verpackungen einen höheren Stoßwiderstand, so daß zerbrechliche Produkte besser vor Bruch geschützt sind, was zu deutlichen Vorteilen gegenüber bekannten Beutelverpackungen, beispielsweise für Kekse, mit sich bringt.

Die erfindungsgemäße Verbundfolie kann für Verpackungen jedes Typs mit zwei oder mehreren Seitenwänden z.B. für Standbeutel oder auch Schlauchbeutel verwendet werden.

Besonders vorteilhaft ist es, Verpackungsbeutel für Flüssigkeiten (Milch, Wasser, Wein usw.) oder Feinpulverprodukte aus dieser Verbundfolie aufzubauen.

Die Verpackungen besitzen nicht nur eine stärkere Struktur, sondern sind im Gegensatz, beispielsweise zu mit Flüssigkeiten gefüllten Schlauch- oder Standbeuteln angenehmer im Griff, was zu einer erhöhten Konsumentenfreundlichkeit führt.

Die typische Folienstärke der Einzelschichten einer Verbundfolie nach der Erfindung betragen 20µ bis 150µ. Die typische Wellenlänge für die Wellenstruktur der Folie liegt zwischen 2mm bis 5mm und die typischen Wellenhöhen zwischen 0,5mm bis 3mm. Selbstverständlich sind auch andere Foliendicken sowie andere Wellenlängen und Wellenhöhen einsetzbar. Sowohl für die eine ebene Struktur aufweisenden Schichten als auch für die eine Wellenstruktur aufweisenden Schichten der Verbundfolie können ein- oder mehrschichtige Folien verwendet werden. Weiterhin ist es möglich Verbundmaterialien zu verwenden, die aus Kunststoff bestehen, das mit einem anderen Stoff beschichtet ist.

So kann die eine ebene Struktur aufweisende Schicht beispielsweise eine Monofolie aus Polyethylen oder Polypropylen sein oder eine andere Art einer hitzeversiegelbaren Folie.

Es können beschichtete Folien, beispielsweise aus LDPE/HDPE oder LDPE/PAP, LDPE/Alufolie, LDPE/PP, LDPE/Barrierefolie, PP/Papier, PP/PE und jede Kombination von Folienarten mit mehreren Schichten, beispielsweise eine 4-Schicht-Folie: LDPE/PAP/EVOH/LDPE verwendet werden.

Die die Wellenstruktur aufweisende Schicht kann ebenfalls aus einer der oben erwähnten Monofolien bestehen, sie kann aber auch als Mehrschichtfolie ausgebildet sein, wie beispielsweise PE/PET, PE/PAP/PET oder PE/Alu/PET.

Die erfindungsgemäße Verbundfolie kann im Prinzip auch so aufgebaut sein, daß entweder die eine ebene Struktur aufweisende Schicht oder die eine Wellenstruktur aufweisende Schicht aus Papier oder Pappe besteht, während die jeweils andere Schicht als Monofolie aus Kunststoff oder auch als Verbundfolie mit Kunststoff mit anderen Stoffen aufgebaut sein kann. Hierbei hat es sich als besonders vorteilhaft erwiesen, wenn die aus Papier oder Pappe bestehende Schicht einen Hitzeversiegelbarkeit erzeugenden Zusatzstoff enthält oder mit einem solchen Zusatzstoff versehen ist. Dies hat den großen Vorteil, daß die erfindungsgemäße Verbundfolie, bei welcher eine der Schichten aus Papier oder Pappe besteht, in einem reinen Hitzeversiegelungsverfahren ohne Verklebung hergestellt werden kann, was große herstellungstechnische Vorteile mit sich bringt.

Schichten aus Papier oder Pappe, die hitzeversiegelbar sind, sind auf Zellulosebasis mit Additiven bekannt, sind aber bisher nicht in einer Verbundfolie mit Wellenstruktur, wie sie in der vorliegenden Anmeldung beschrieben wird, eingesetzt worden.

Die erfindungsgemäße Verbundfolie kann außer zur Herstellung von Verpackungsbeuteln, wie es weiter unten anhand von Ausführungsbeispielen beschrieben wird, auch zur Herstellung üblicher Kartons mit quaderförmigem Aufbau verwendet werden.

Im folgenden werden anhand der beigefügten Zeichnungen der Aufbau einer Verbundfolie nach der Erfindung sowie aus dieser Folie hergestellte Verpackungsbeutel beschrieben.

In den Zeichnungen zeigen:
Fig. 1 einen schematischen Schnitt durch eine eine ebene Struktur aufweisende Ein- oder Mehrschicht-Kunststoffolie;
Fig. 2 einen Schnitt analog Fig. 1 durch eine Ein- oder Mehrschicht-Kunststoffolie mit Wellenstruktur;
Fig. 3 eine Verbundfolie aus den Folien nach Fig. 1 und Fig. 2;
Fig. 4 in perspektivischer Darstellung einen Verpackungsbeutel, der aus Folienstücken der Folie nach Fig. 3 aufgebaut ist;
Fig. 5 eine andere Ausführungsform eines Verpackungsbeutels, der aus Folienstücken der Folie nach Fig. 3 aufgebaut ist.

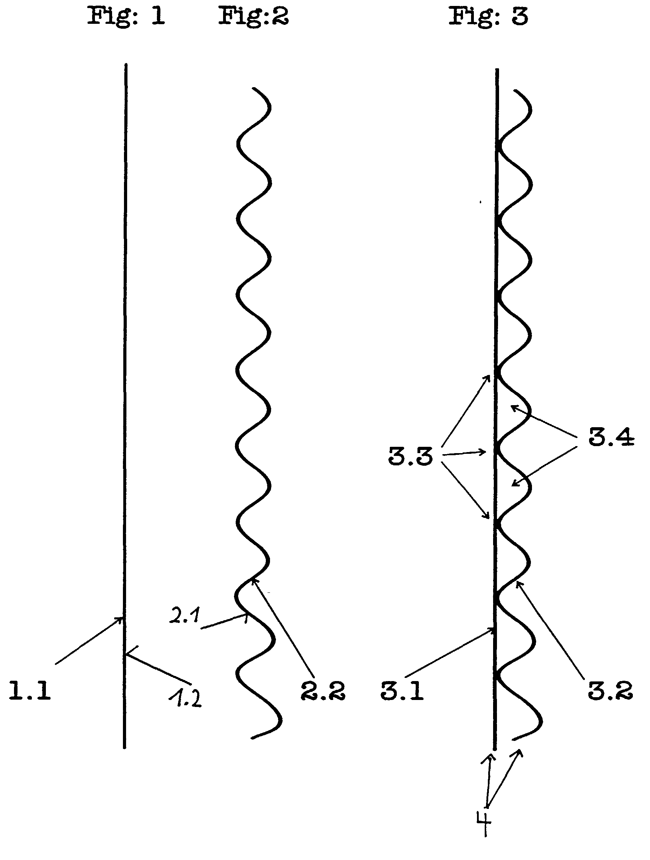

Fig. 1 zeigt eine eine ebene Struktur aufweisende Ein- oder Mehrschicht-Kunststoffolie 1.1. Auf diese soll eine, eine Wellenstruktur aufweisende Ein- oder Mehrschicht-Kunststoffolie 2.2 aufgebracht und mit ihr verschweißt werden, die in Fig. 2 dargestellt ist. Da eine Verbindung durch Versiegelung erfolgt, richtet sich in den Fig. 1 und 2 die siegelfähige Seite 2.1 der Folie 2.2 in Richtung auf die siegelfähige Seite 1.2 der eine ebene Struktur aufweisende Folie 1.1.

Fig. 3 zeigt die beiden in Fig. 1 und 2 dargestellten Folien im Verbund. In Fig. 3 ist die eine ebene Struktur aufweisende Folie mit 3.1 und die eine Wellenstruktur aufweisende Folie mit 3.2 bezeichnet die zusammen die Verbundfolie 4 bilden. Die Verbindung geschieht an den Wellenkämmen 3.3 der eine Wellenstruktur aufweisenden Folie 3.2, die der eine ebene Struktur aufweisenden Folie 3.1 zugewandt sind. In diesem Bereich erfolgt die Versiegelung der beiden Folien, was zur Folge hat, daß zwischen diesen Folien geradlinige, parallel verlaufende Kanäle 3.4 entstehen, die geschlossene Seitenwände besitzen und an ihren Enden durch Verschweißen zu langgestreckten Kammern geschlossen werden können.

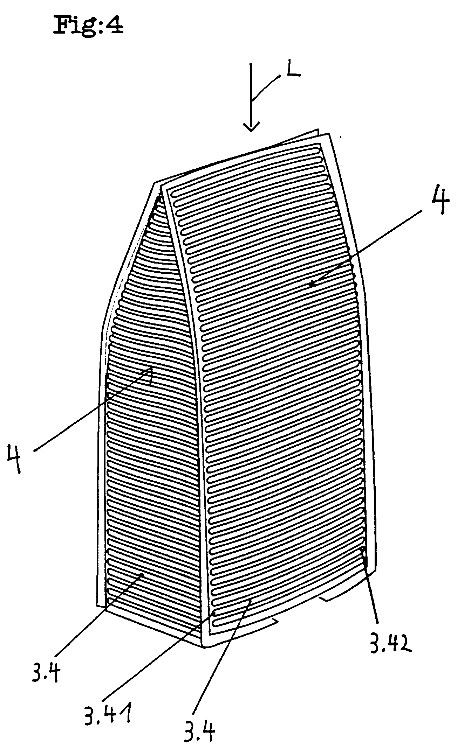

Fig. 4 zeigt einen Verpackungsbeutel an sich bekannter Bauart, wie er beispielsweise in EP 0 580 989 B1 beschrieben ist, bestehend aus vier im Bereich ihrer Seitenkanten sowie ihrer unteren und oberen Kanten über Schweißnähte dichtend miteinander verbundenen Folienstücken aus flexiblen Material zur Bildung einer Vorderwand, einer Rückwand und zwei Seitenwänden. Dabei ist jedes eine Seitenwand bildende Folienstück mit seinen unteren Abschnitten nach innen gefaltet und vollständig unter den Boden des Beutels herumgeklappt zur Bildung einer ebenen Aufstandsfläche. Der Beutel ist aus Folienstücken der Folie 4 in Fig. 3 derart aufgebaut, daß die zwischen den Schichten der Verbundfolie 4 laufenden geradlinigen Kanäle 3.4 in einer Richtung quer zur Längsachse L des Verpackungsbeutels verlaufen. Weiterhin sind bei der Herstellung des Verpackungsbeutels durch das Verschweißen der Kanten des Verpackungsbeutels die Enden 3.41 und 3.42 dieser Kanäle verschlossen.

Durch dieses Verschließen der Kanäle 3.4 entsteht in den gebildeten Kammern ein geschlossenes Luftpolster, das einerseits die Steifigkeit des Verpackungsbeutels erhöht und andererseits als Isolierschicht wirkt.

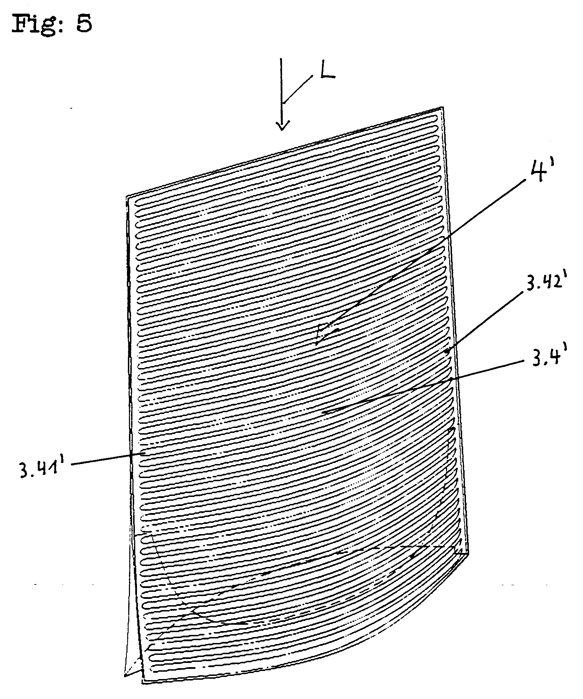

Fig. 5 zeigt einen weiteren Verpackungsbeutel an sich bekannter Bauart, bestehend aus zwei, eine Vorder- und eine Rückwand bildenden im Bereich ihrer Kanten über Schweißnähte dichtend miteinander verbundenen Folienstücken, wobei an der Unterseite des Beutels ein Bodenstück eingesetzt ist. Die beiden die Vorder- und Rückwand bildenden Folienstücke bestehen wiederum aus einer Verbundfolie gemäß Fig. 3, die in Fig. 5 mit 4' bezeichnet ist, und sind derart aufgebaut, daß die zwischen den Schichten der Verbundfolie laufenden geradlinigen Kanäle 3.4' in einer Richtung quer zur Längsachse L des Verpackungsbeutels verlaufen. Weiterhin sind auch bei diesem Verpackungsbeutel bei der Herstellung durch das Verschweißen der Kanten die Enden 3.41' und 3.42' dieser Kanäle verschlossen. Auch dieser Verpackungsbeutel besitzt eine hohe Standfestigkeit und Formstabilität.

## Patentansprüche

1. Verbundfolie, insbesondere zur Herstellung von Verpackungsbeuteln und -kartons, bestehend aus mindestens zwei miteinander verschweißten Schichten, von denen mindestens eine Schicht aus einem hitzeversiegelbaren Material besteht oder mit einem hitzeversiegelbaren Material versehen ist, dadurch gekennzeichnet, daß mindestens eine erste Schicht aus einer eine Wellenstruktur aufweisenden Ein- oder Mehrschichtfolie (2.2, 3.2) besteht, auf die mindestens eine weitere, eine ebene Struktur aufweisende Ein- oder Mehrschichtfolie (1.1, 3.1) an mindestens einer Seite derart aufgebracht ist, daß sich die Oberflächen der beiden Schichten linienweise im Bereich der Wellenkämme (3.3) der ersten Schicht berühren und dort miteinander verschweißt sind zur Bildung geradliniger, paralleler Kanäle (3.4) zwischen den Schichten.

2. Verbundfolie nach Anspruch 1, dadurch gekennzeichnet, daß die eine Wellenstruktur aufweisende Schicht (2.2, 3.2) aus einer Ein- oder Mehrschichtfolie besteht.

3. Verbundfolie nach Anspruch 1 oder 2, dadurch gekennzeichnet, daß die eine ebene Struktur aufweisende Schicht (1.1, 3.1,) aus einer Ein- oder Mehrschichtfolie besteht.

4. Verbundfolie nach Anspruch 2 oder 3, dadurch gekennzeichnet, daß die eine Wellenstruktur aufweisende Schicht (2.2, 3.2) und/oder die eine ebene Struktur aufweisende Schicht (1.1, 3.1) aus einer Ein- oder Mehrschicht-Kunststoffolie besteht.

5. Verbundfolie nach einem der Ansprüche 1-4, dadurch gekennzeichnet, daß mindestens eine der Schichten (1.1, 2.2, 3.1, 3.2) aus einem Verbundmaterial aus Kunststoff mit einem anderen Stoff besteht.

6. Verbundfolie nach einem der Ansprüche 1 bis 5, dadurch gekennzeichnet, daß die Dicke der die Schichten aufbauenden Folien 20_{µ} bis 150µ beträgt.

7. Verbundfolie nach einem der Ansprüche 1-5, dadurch gekennzeichnet, daß die Dicke der die Schichten aufbauenden Folien mehr als 150µ beträgt.

8. Verbundfolie nach einem der Ansprüche 1-7, dadurch gekennzeichnet, daß die Wellenlänge der eine Wellenstruktur aufweisenden Folie bzw. Folien (2.2, 3.2) 2 - 5 mm beträgt.

9. Verbundfolie nach einem der Ansprüche 1-7, dadurch gekennzeichnet, daß die Wellenlänge der eine Wellenstruktur aufweisenden Folie bzw. Folien mehr als 5 mm beträgt.

10. Verbundfolie nach einem der Ansprüche 1-9, dadurch gekennzeichnet, daß die Wellenhöhe der eine Wellenstruktur aufweisenden Folie bzw. Folien (2.2, 3.2) 0,5 - 3 mm beträgt.

11. Verbundfolie nach einem der Ansprüche 1-9, dadurch gekennzeichnet, daß die Wellenhöhe der eine Wellenstruktur aufweisenden Folie bzw. Folien mehr als 3 mm beträgt.

12. Verbundfolie nach einem der Ansprüche 1-11, dadurch gekennzeichnet, daß die erste oder die zweite Schicht (2.2, 3.2 bzw. 1.1, 3.1) aus Papier oder Pappe besteht.

13. Verbundfolie nach Anspruch 12, dadurch gekennzeichnet, daß die aus Papier oder Pappe bestehende Schicht einen Hitzeversiegelbarkeit erzeugenden Zusatzstoff enthält oder mit einem solchen Zusatzstoff versehen ist.

14. Verpackungsbeutel oder -karton, bestehend aus mindestens zwei an ihren jeweils aneinanderangrenzenden Kanten miteinander verschweißten Folienstücken, dadurch gekennzeichnet, daß mindestens einige der die Wände und ggf. den Boden des Verpackungsbeutels bzw. -kartons bildenden Folienstücke aus einer Verbundfolie (4) nach einem der Ansprüche 1 - 13 besteht.

15. Verpackungsbeutel oder -karton nach Anspruch 14, dadurch gekennzeichnet, daß die durch die Wellenstruktur gebildeten Kanäle (3.4) im Bereich der Kanten des Verpackungsbeutels oder -kartons durch Verschweißen an ihren Enden (3.41, 3.42) verschlossen sind.

16. Verpackungsbeutel oder -karton nach Anspruch 14 oder 15, dadurch gekennzeichnet, daß die durch die Wellenstruktur gebildeten Kanäle (3.4) bei mindestens einem der Folienstücke in einer Richtung quer zur Längsachse (L) des Verpackungsbeutels verlaufen.
